# EUROPEAN PATENT APPLICATION

(11) **EP 2 455 279 A1**
(43) Date of publication of application: **23.05.2012**
(21) Application number: 11190100.5
(22) Date of filing: 22.11.2011
(51) Int. Cl.: B62J 15/00, B62J 17/00

(54) **Motorcycle**

(30) Priority: 22.11.2010 JP 2010260041
(71) Applicant: Yamaha Hatsudoki Kabushiki Kaisha, Iwata-shi, Shizuoka 438-8501 (JP)
(72) Inventor: Weicheng, Lu, Chunli (TW)
(74) Representative: Grünecker, Kinkeldey, Stockmair & Schwanhäusser

(57) **Abstract**

A motorcycle (10) which is compact but more effectively prevents water and mud from being splashed onto the rider includes a motorcycle frame (12), a pivoting unit (22), a seat (40), and a motorcycle body cover (52) which includes side covers (56) . The pivoting unit (22) includes a drive unit (26), a rear wheel (28) and a rear fender (30), and is supported pivotably by the motorcycle frame (12). Each side cover (56) includes a first lower edge portion (56d) extending obliquely in a rearward and upward direction, and a second lower edge portion (56e) extending from a rear end of the first lower edge portion (56d) obliquely in a rearward and upward direction. The angle (θ1) which is defined by the second lower edge portion (56e) and a vertical line is smaller than the angle (θ2) defined by the first lower edge portion (56d) and a vertical line. The side cover (56) includes a rear end (P), which is at a more forward position than the center (X) of the rear wheel (28). The rear fender (30) covers the rear wheel (28) from above, and extends from below the first lower edge portion (56d) and the second lower edge portion (56e) to a more rearward position than the rear end of the rear wheel (28) in a side view.

## Description

### BACKGROUND OF THE INVENTION

### 1. Field of the Invention

The present invention relates to motorcycles, and more specifically to scooter-type motorcycles.

### 2. Description of the Related Art

Japanese Patent No. 4322309 proposes a motorcycle 1a, and JP-A H10-218058 proposes a motorcycle 1b. Both are classified as scooter-type motorcycles.

Referring to Fig. 17, the motorcycle 1a disclosed in Japanese Patent No. 4322309 is provided with a rear fender 3a which pivots together with a rear wheel 2a. The rear fender 3a is formed substantially in an arc shape to cover an upper portion of the rear wheel 2a. It is understood that the rear fender 3a blocks water and mud splashed by the rear wheel 2a, preventing the water and mud from flying further upward, so the rider will not get much water and mud splashed by the rear wheel 2a.

On the other hand, referring to Fig. 18, in the motorcycle 1b disclosed in JP-A H10-218058, a motorcycle body has a rear portion provided with a long rear fender 3b. The rear fender 3b is disposed by being fixed to the motorcycle body, slightly at a distance from the rear wheel 2b, to extend straightly from above the rear wheel 2b in a rearward direction of the rear wheel 2b.

The motorcycle 1a disclosed in Japanese Patent No. 4322309 and the motorcycle 1b disclosed in JP-A H10-218058 have the rear fenders 3a, 3b as described respectively, thereby reducing, but not sufficiently, splashes of water and mud onto the rider.

The inventor of the present invention decided to provide a motorcycle capable of significantly reducing and minimizing splashes of water and mud onto the rider more completely, and as a result, discovered that there are primarily two patterns in which water and mud are splashed onto the rider. The first pattern involves water and mud splashed by the rear wheel fly directly to the rider (hereinafter called "pattern 1"). The second pattern involves water and mud blown from the motorcycle body cover onto the rider (hereinafter called "pattern 2").

Now, description will cover how water and mud will flow in the pattern 2.

As the motorcycle moves, wind (an air stream) flows from front toward rear of the motorcycle. Water and mud may be splashed onto a side cover and thereafter, their behavior is influenced by their weight and the air stream which flows from the front toward the rear of the motorcycle. Water and mud on the side cover will flow on the side cover from front toward rear. As the water and mud flow from the front toward the rear on the side cover, they come to a rear end of the side cover, and then leave the side cover. The air stream which flows from front to rear of the motorcycle hits the rider and diverges in leftward, rightward and upward directions. This produces a partial vacuum in a space behind the rider. Therefore, water and mud which have left the side cover is drawn into the space behind the rider, causing the rider to get the water and the mud on his/her back from behind.

Especially, the side cover in scooter-type motorcycles has a greater dimension in its up-down direction than in most other motorcycles, and for this reason, the side cover receives a greater amount of water and mud. Also, the rear wheel is positioned closely to the side cover, which increases the amount of water and mud splashed by the rear wheel onto the side cover. Therefore, water and mud flowing in the pattern 2 are more significant in the scooter-type motorcycles than in the motorcycles of other types.

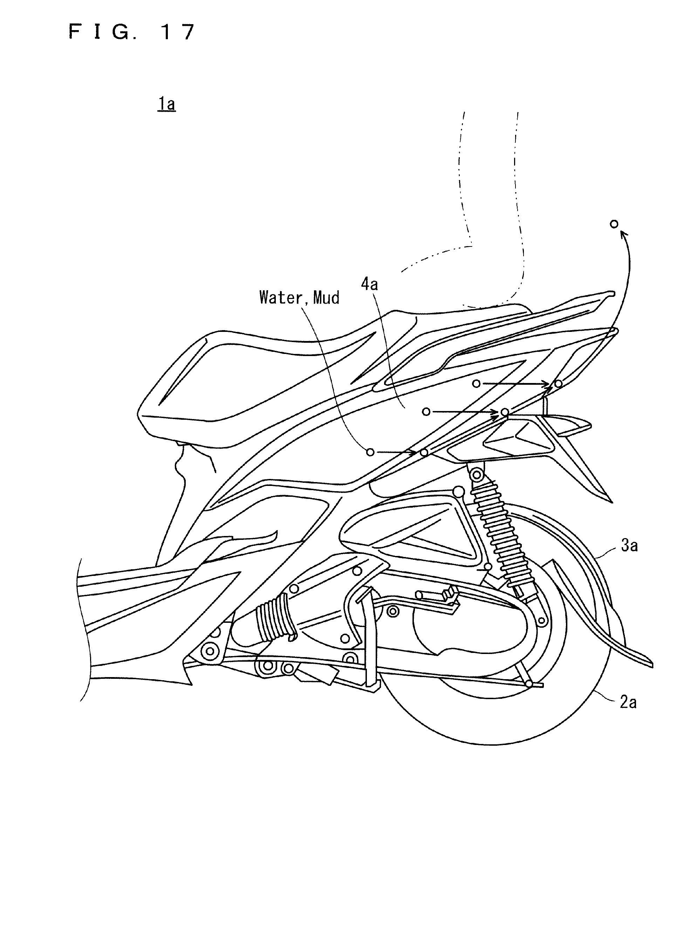

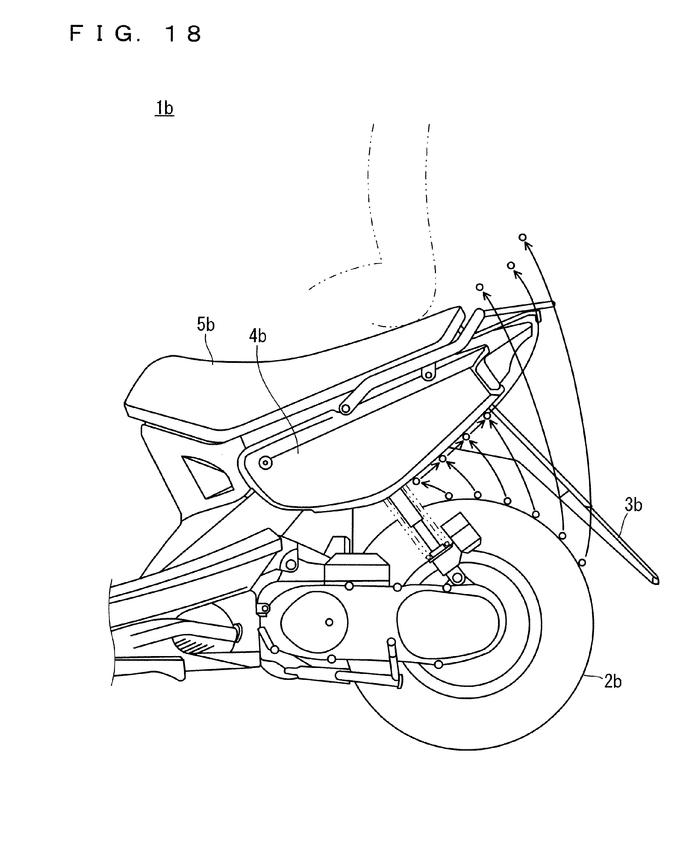

The motorcycle 1a disclosed in Japanese Patent 4322309 can reduce pattern-1 splashes of water and mud onto the rider with the rear fender 3a. However, as shown in Fig. 17, the rider will still receive water and mud in pattern 2 since the splashes will fly to a side surface of the side cover 4a from the front wheel of the motorcycle 1a operated by the rider, from other vehicles moving ahead of or in parallel with the motorcycle 1a, or from falling rain, etc. It should be noted here that in Fig. 17 and Fig. 18, water and mud are drawn as white circles (o).

On the other hand, in the motorcycle 1b disclosed in JP-A H10-218058, the rear fender 3b does not cover an upper portion of the rear wheel 2b, and is at a distance from the rear wheel 2b. Therefore, as shown in Fig. 18, water and mud splashed by the rear wheel 2b are not blocked sufficiently by the rear fender 3b, and are splashed directly onto the rider following the pattern 1. Also, part of the water and mud splashed by the rear wheel 2b flies to the side cover 4b, then flows on a lower surface of the side cover 4b in a rearward and upward direction. Then the water and mud are drawn by the partial vacuum behind the rider and travel to the rider following the pattern 2.

As understood from the above, it is not possible for the motorcycle 1a according to Japanese Patent 4322309 and the motorcycle 1b according to JP-A H10-218058 to reduce splashes of water and mud onto the rider to a satisfactory extent.

In a side view, the rear end of the side cover 4b in the motorcycle 1b disclosed in JP-A H10-218058 is at a more rearward position than the center of the rear wheel 2b, and there is only a small space above the rear wheel 2b. Therefore, if the rear fender 3a disclosed in Japanese Patent 4322309 is to be provided in the motorcycle 1b disclosed in JP-A H10-218058 in order to cover the rear wheel 2b, many parts and components around the rear wheel 2b must be relocated to higher positions, which also means that a seat 5b must be relocated to a higher position. Any arrangements which require re-location of the seat is not desirable and must be rejected completely in view of motorcycle design requirements. Therefore, it is impossible to combine features of Japanese Patent 4322309 with JP-A H10-218058.

### SUMMARY OF THE INVENTION

Therefore, preferred embodiments of the present invention provide a motorcycle which is compact but more effectively prevents water and mud from being splashed onto the rider.

According to a preferred embodiment of the present invention, a motorcycle includes a motorcycle frame; a pivoting unit supported pivotably by the motorcycle frame and including a drive unit, a rear wheel driven by the drive unit, and a rear fender arranged to cover an upper portion of the rear wheel; a seat disposed above the pivoting unit; and a motorcycle body cover disposed between the seat and the pivoting unit in a side view. The motorcycle body cover includes a side cover provided on a side of the motorcycle frame. The side cover includes a first lower edge portion extending obliquely in a rearward and upward direction, and a second lower edge portion extending from a rear end of the first lower edge portion obliquely in a rearward and upward direction. The second lower edge portion and a vertical line define a smaller angle than an angle defined by the first lower edge portion and the vertical line. The side cover includes a rear end at a more forward position than a center of the rear wheel, and the rear fender extends from below the first lower edge portion and the second lower edge portion, to a more rearward position than a rear end of the rear wheel in a side view.

According to another preferred embodiment of the present invention, a motorcycle includes a motorcycle frame; a pivoting unit supported pivotably by the motorcycle frame and including a drive unit, a rear wheel driven by the drive unit, and a rear fender arranged to cover an upper portion of the rear wheel; a seat disposed above the pivoting unit; and a motorcycle body cover disposed between the seat and the pivoting unit in a side view. The motorcycle body cover includes a side cover provided on a side of the motorcycle frame. The side cover includes a first lower edge portion extending obliquely in a rearward and upward direction, and a second lower edge portion extending from a rear end of the first lower edge portion obliquely in a rearward and upward direction. The second lower edge portion and a vertical line define a smaller angle than an angle defined by the first lower edge portion and the vertical line. The second lower edge portion includes a rear end at a more forward position than a center of the rear wheel, and the rear fender extends from below the first lower edge portion and the second lower edge portion, to a more rearward position than a rear end of the rear wheel in a side view.

According to various preferred embodiments of the present invention described above, the motorcycle body cover includes a side cover. The side cover includes the first lower edge portion which extends obliquely in a rearward and upward direction; and the second lower edge portion which extends from the rear end of the first lower edge portion obliquely in a rearward and upward direction. The second lower edge portion and a vertical line define a smaller angle than an angle defined by the first lower edge portion and the vertical line. Further, the rear end of the side cover or the rear end of the second lower edge portion is at a more forward position than the center of the rear wheel. The side cover arranged as described above makes it possible to provide the side cover at a forward position, makes the side cover small in dimension in the fore-aft direction, and widens the space between the rear wheel and the seat. Therefore, it becomes possible to arrange the rear fender to cover an upper portion of the rear wheel and to extend from below the first lower edge portion and the second lower edge portion to a more rearward position than the rear end of the rear wheel in a side view. With the arrangement described, water and mud splashed by the rear wheel are blocked by the rear fender and do not scatter in an upward direction. Thus, the arrangement significantly reduces and minimizes the amount of water and mud splashed onto the rider in the pattern 1. Water and mud will still be splashed onto the side cover of the motorcycle body cover from the front wheel of the moving motorcycle, from other vehicles moving ahead of or moving in parallel with the motorcycle or from falling rain, etc. The water and mud from these sources flow along the first lower edge portion from front to rear, and then leave the motorcycle at the rear end of the first lower edge portion. Further, the second lower edge portion is angled more steeply, i.e., more closely to the vertical, than the first lower edge portion, and therefore, there is little water and mud which flows from front to rear along the second lower edge portion, and as water and mud reach the second lower edge portion, they leave the motorcycle at the second lower edge portion. Since this leaving edge is spaced at a distance from a partial vacuum space behind the rider, the leaving water and mud are not drawn into the vacuum space. Thus, the arrangement reduces the amount of water and mud splashed onto the rider in the pattern 2. Therefore, it is possible to reduce splashes in both of the patterns 1 and 2, and to reduce splashes to the rider. Further, since it is possible to increase the space above the rear wheel, there is no need to raise the position of the seat even if the rear fender is provided to cover the rear wheel. Thus, preferred embodiments of the present invention provide a compact motorcycle.

Preferably, the side cover includes a rear end at a more forward position than a rear end of the seat. In this case, it is possible to increase the space between the rear wheel and the seat, and increase design freedom in layout of the rear fender.

Further preferably, the second lower edge portion includes a rear end at a more forward position than a rear end of the seat. In this case, it is possible to increase a space between the rear wheel and the seat, and increase design freedom in layout of the rear fender.

Further, preferably, the motorcycle body cover further includes a rear cover. With this arrangement, the rear cover includes a front portion positioned between the side cover and a rear portion of the seat in a side view; the rear cover does not protrude laterally outward of the motorcycle beyond the side cover in a plan view nor in a rear view. In this case, it is possible to provide a small lateral dimension to the motorcycle body cover at its rear portion, thereby making the rear portion of the motorcycle compact.

Preferably, the motorcycle further includes a license plate bracket provided behind the motorcycle body cover, and behind the second lower edge portion in a side view. In this case, it is possible to further reduce upward splashes of water and mud in the pattern 2 with the license plate bracket. Specifically, the arrangement makes it possible to further reduce water and mud being splashed from the side cover onto the rider.

Further preferably, the second lower edge portion has a greater dimension than the first lower edge portion, in an up-down direction in a side view. In this case, the arrangement makes it possible to position a connecting portion which connects the first lower edge portion with the second lower edge portion, at a relatively lower location between the seat and the rear wheel in a side view, making it possible to provide an increased space behind the second lower edge portion. Therefore, it is possible to provide a large space between the side cover and the rear wheel.

Further, preferably, the second lower edge portion has a smaller dimension than the first lower edge portion, in a fore-aft direction in a side view. In this case, a region of the side cover which is between the seat and the rear wheel in a side view and extending rearward beyond the connecting portion which connects the first lower edge portion with the second lower edge portion can be made relatively small, making it possible to provide a large space behind the second lower edge portion. Therefore, it is possible to provide a large space above the rear wheel.

Preferably, the side cover further includes a first lower bending portion bending from the first lower edge portion in a downward and laterally inward direction of the motorcycle; and a second lower bending portion bending from the second lower edge portion in a downward and laterally inward direction of the motorcycle. In this case, a region of the side cover which is between the seat and the rear wheel in a side view and extending downward beyond the first lower edge portion and the second lower edge portion can be made relatively small, making it possible to provide a large space below the first lower edge portion and the second lower edge portion. Therefore, it is possible to provide a large space between the side cover and the rear wheel.

Further preferably, the side cover further includes a first lower bending portion bending from the first lower edge portion in a rearward and laterally inward direction of the motorcycle, and a second lower bending portion bending from the second lower edge portion in a rearward and laterally inward direction of the motorcycle. In this case, a region of the side cover which is between the seat and the rear wheel in a side view and extending rearward beyond the first lower edge portion and the second lower edge portion can be made relatively small, making it possible to provide a large space behind the first lower edge portion and the second lower edge portion. Therefore, it is possible to provide a large space above the rear wheel.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a left side view of a motorcycle according to a preferred embodiment of the present invention.

Fig. 2 is a plan view of the motorcycle according to a preferred embodiment of the present invention.

Fig. 3 is a partially unillustrated rear view of the motorcycle according to a preferred embodiment of the present invention.

Fig. 4 is a rear perspective view showing a rear portion of the motorcycle.

Fig. 5 is a left side view showing a rear portion of the motorcycle.

Fig. 6 is a left side view showing a rear portion of the motorcycle.

Fig. 7 is an exploded perspective view showing a motorcycle frame and a surrounding area.

Fig. 8 is an exploded perspective view showing a motorcycle frame and a surrounding area.

Fig. 9 is a front perspective view showing a rear portion of the motorcycle.

Fig. 10 is a schematic end view taken in lines A-A in Fig. 6.

Fig. 11 is a schematic end view taken in lines B-B in Fig. 6.

Fig. 12 is a schematic end view taken in lines C-C in Fig. 6.

Fig. 13 is a schematic end view taken in lines D-D in Fig. 6.

Fig. 14 is a schematic end view taken in lines E-E in Fig. 6.

Fig. 15 is a schematic end view taken in lines F-F in Fig. 6.

Fig. 16 is an illustrative drawing for describing a flow of water and mud.

Fig. 17 is an illustrative drawing for describing a flow of water and mud in Japanese Patent No. 4322309.

Fig. 18 is an illustrative drawing for describing a flow of water and mud in JP-A H10-218058.

### DETAILED DESCRIPTION OF THE PREFERRED EMBODIMENTS

Hereinafter, preferred embodiments of the present invention will be described with reference to the drawings.

It should be noted here that when describing motorcycles according to preferred embodiments of the present invention, a left-right direction, a fore-aft direction, and an up-down direction are defined from the motorcycle rider's position on a seat of a motorcycle, with the rider facing toward a handlebar. In the figures, a cross-shaped arrow mark indicates directions: an "Fr" arrow indicates forward, "Rr" indicates rearward, "U" indicates upward, "Lo" indicates downward, "R" indicates rightward, and "L" indicates leftward. The term laterally inward of the motorcycle means a direction toward the centerline of the motorcycle in terms of the left-right directions of the motorcycle. Also, the term laterally outward of the motorcycle means a direction away from the centerline of the motorcycle in terms of the left-right directions of the motorcycle.

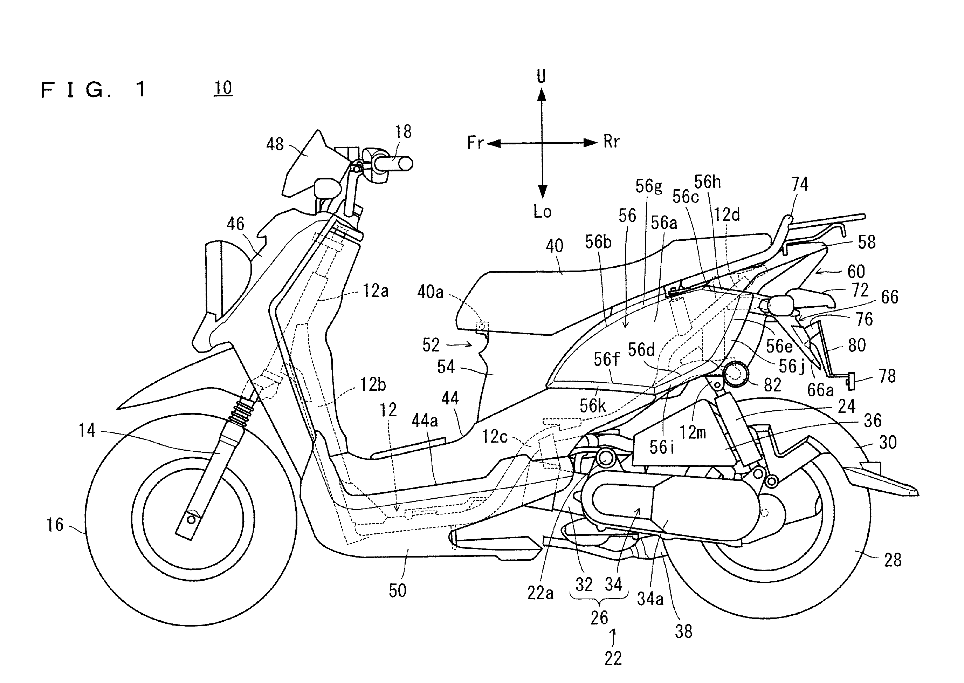

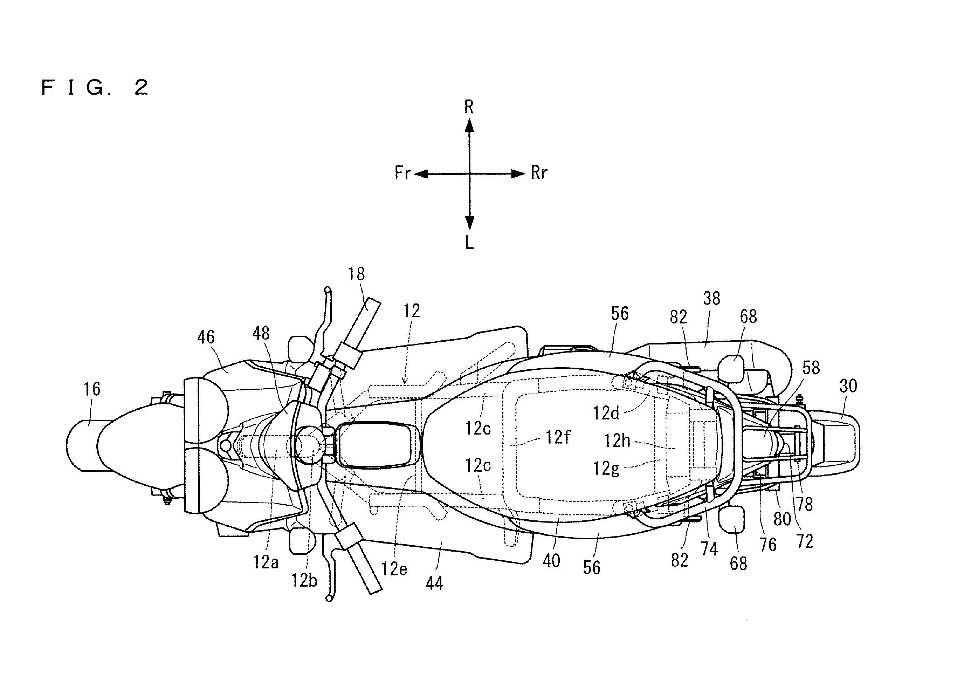

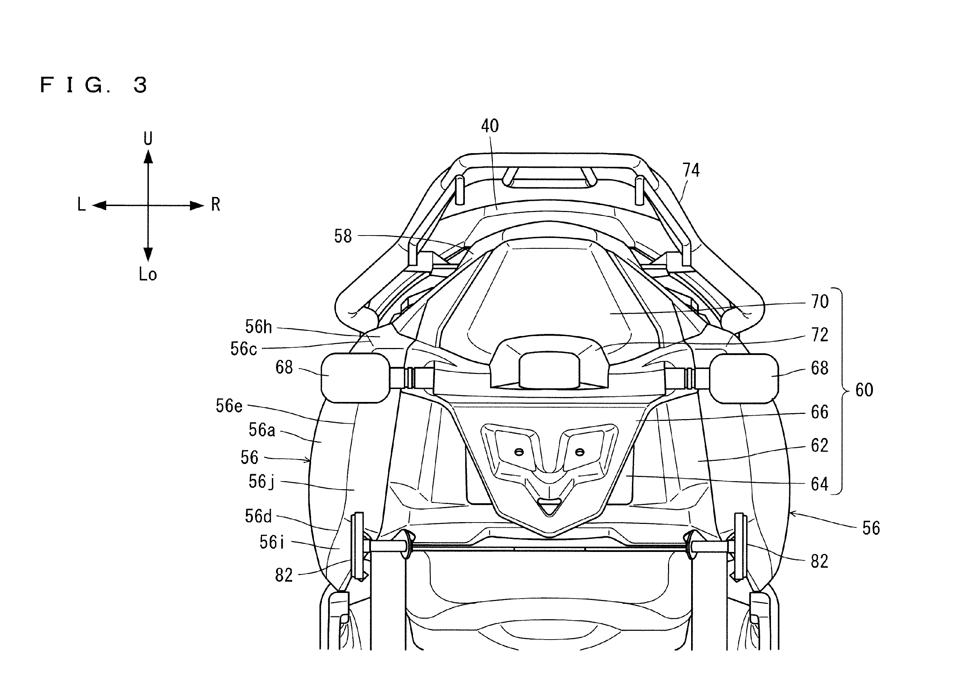

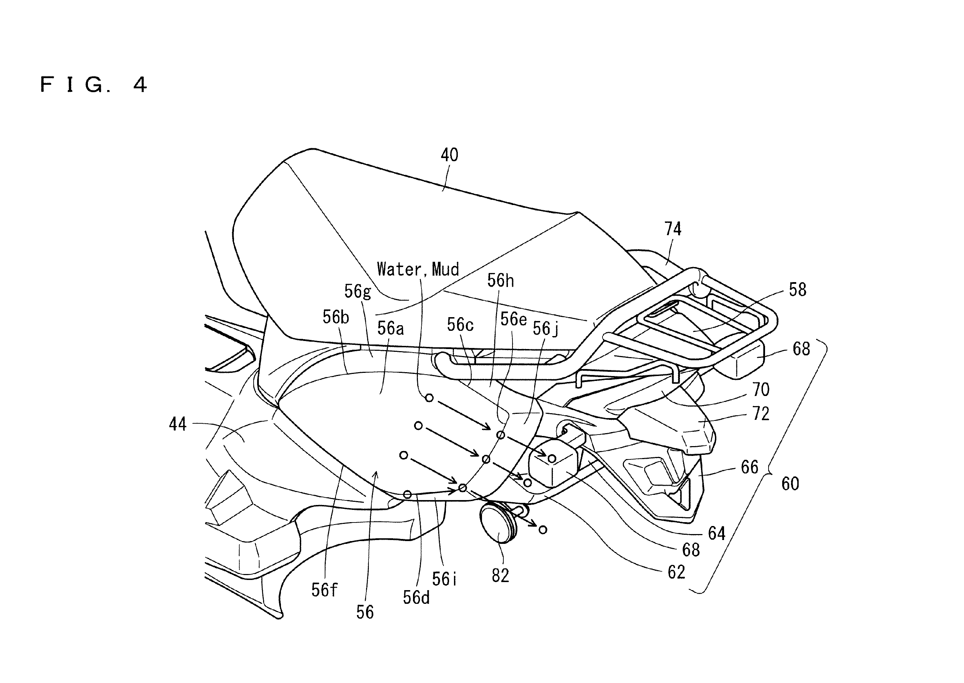

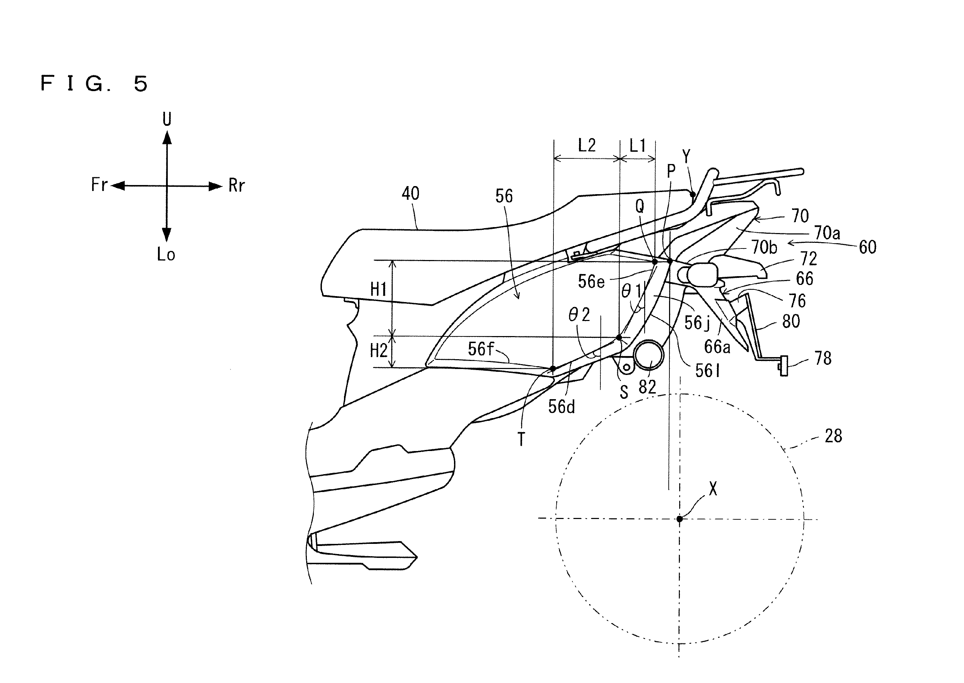

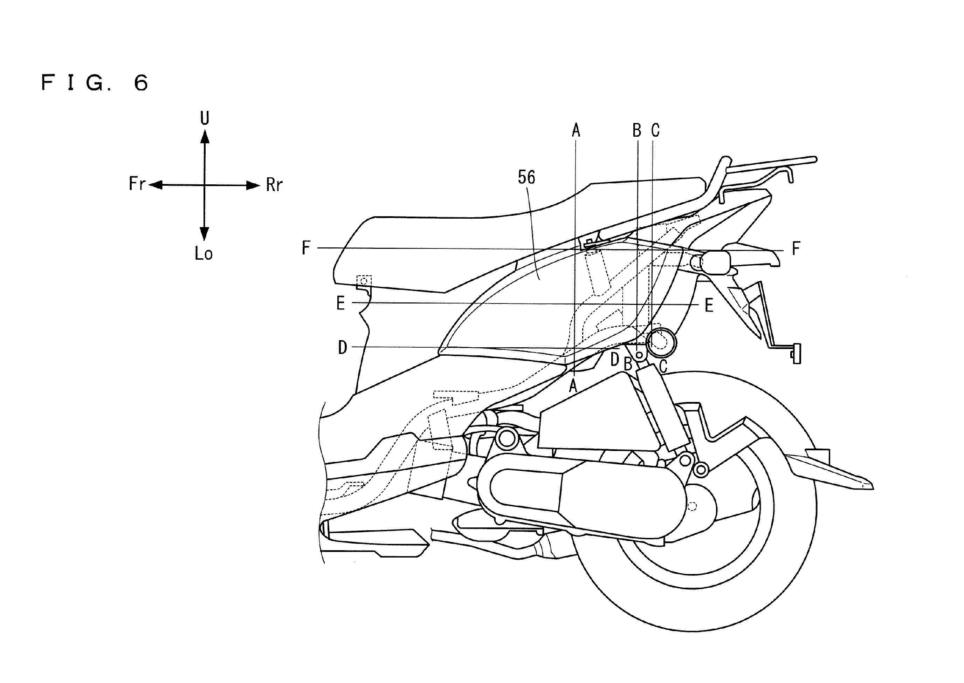

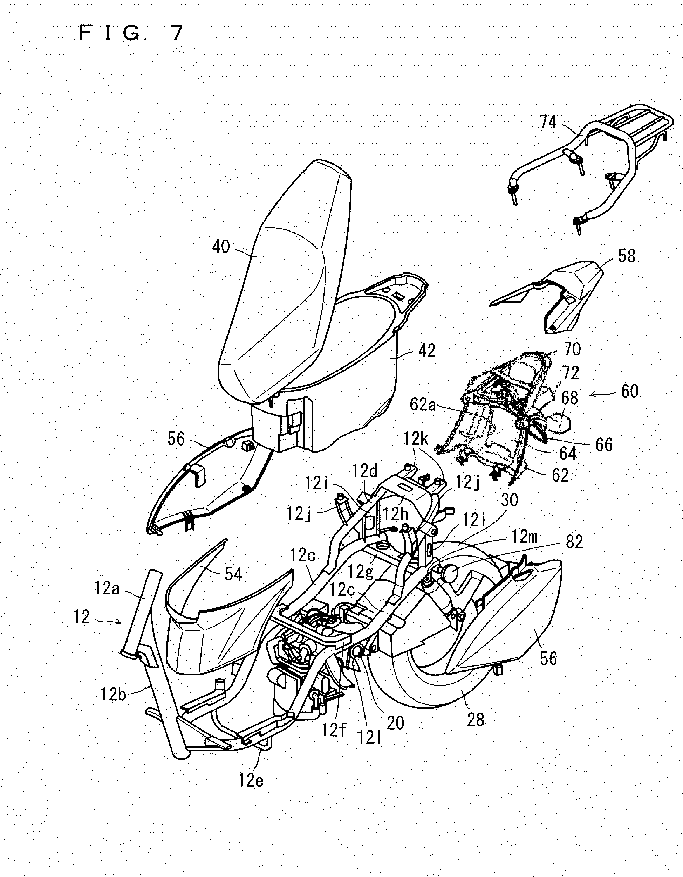

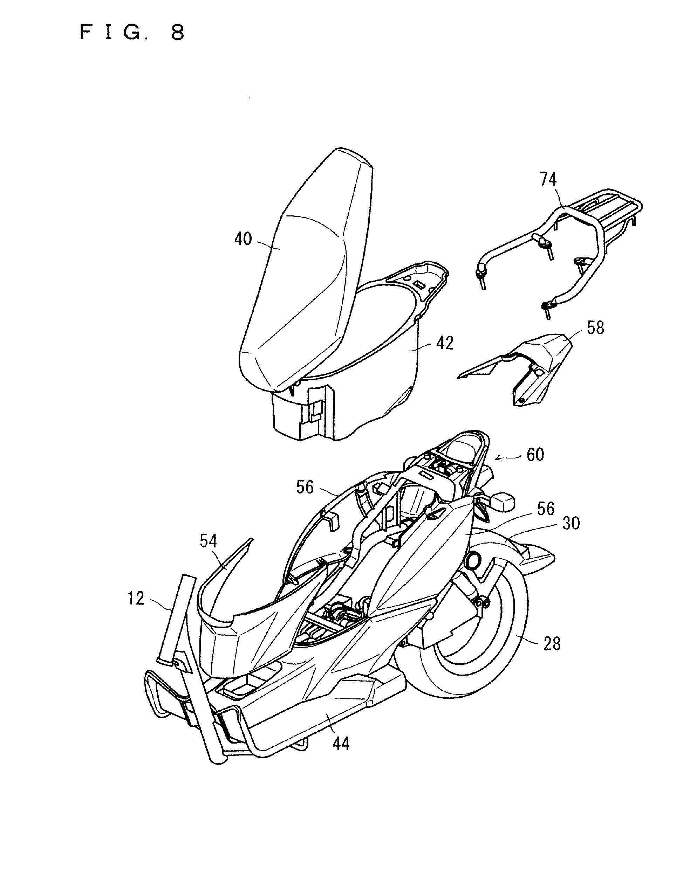

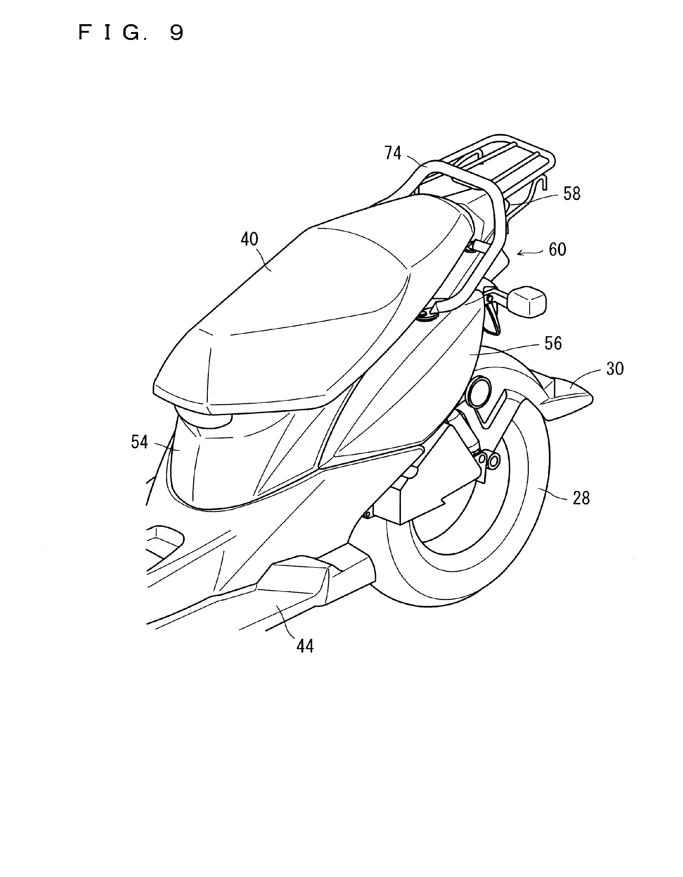

Fig. 1 is a left side view of a motorcycle 10 according to a preferred embodiment of the present invention. Fig. 2 is a plan view of the motorcycle 10. Fig. 3 is a partially unillustrated rear view of the motorcycle 10. Fig. 4 is a rear perspective view showing a rear portion of the motorcycle 10. Fig. 5 and Fig. 6 are left side views showing a rear portion of the motorcycle 10. Fig. 7 and Fig. 8 are exploded perspective views showing a motorcycle frame 12 and its surrounds. Fig. 9 is a front perspective view showing a rear portion of the motorcycle 10.

Referring to Fig. 1 and Fig. 2, the motorcycle 10 preferably is a so called scooter-type motorcycle, and includes a motorcycle frame 12.

Referring also to Fig. 2 and Fig. 7, the motorcycle frame 12 includes a head pipe 12a; a front frame 12b; a pair of lower frames 12c; an upper frame 12d; connecting portions 12e, 12f and 12g; a support frame 12h; two connecting portions 12i; two mounting portions 12j; two mounting portions 12k; two brackets 121; and a bracket 12m.

The front frame 12b extends from the head pipe 12 obliquely in a rearward and downward direction. The pair of lower frames 12c extend from a lower portion of the front frame 12b obliquely in a rearward and upward direction, with a space between the pair. The upper frame 12d preferably is U-shaped or substantially U-shaped, connects rear end portions of the pair of lower frames 12c with each other, and extends obliquely in a rearward and upward direction. The lower frames 12c have their front portions, center portions and rear portions connected with each other by the connecting portions 12e, 12f and 12g, respectively. The support frame 12h is provided in the upper frame 12d to support a seat 40 (to be described later). Each of the lower frames 12c is connected with the upper frame 12d by the connecting portion 12i. Each of the mounting portions 12j extends upward from the upper frame 12d. Each of the mounting portions 12k extends from a rear portion of the upper frame 12d obliquely in a rearward and upward direction. A carrier 74 (to be described later) is attached to each of the mounting portions 12j and 12k. The bracket 121 is attached to the center portion or to a substantially central portion of each lower frame 12c. Note that Fig. 7 shows the left bracket 121 only. The bracket 12m is attached to a rear end portion of the left lower frame 12c.

Returning to Fig. 1, the head pipe 12a rotatably supports a front fork 14. The front fork 14 extends obliquely in a forward and downward direction. The front fork 14 includes a lower end portion, which supports a front wheel 16 rotatably. The front fork 14 has its upper end portion provided with a handlebar 18.

The bracket 121 supports a pivot shaft 20 (see Fig. 7). The pivot shaft 20 is connected with a supporting portion 22a of a pivoting unit 22 by a link member (not illustrated). Specifically, the pivoting unit 22 is supported by the motorcycle frame 12 so as to be pivotable in the up-down direction around the pivot shaft 20. A rear cushion unit 24 is disposed between the bracket 12m which is provided at a rear end portion of the left lower frame 12c and a transmission unit 34 (to be described later) which is included in the pivoting unit 22. Thus, the pivoting unit 22 is supported by the motorcycle frame 12 via the rear cushion unit 24. It should be noted here that the bracket 12m of the motorcycle frame 12, to which an upper end portion of the rear cushion unit 24 is attached, is at a higher position than a rear fender 30 (to be described later).

The pivoting unit 22 includes a drive unit 26, a rear wheel 28 and the rear fender 30. The drive unit 26 includes an engine 32 and a transmission unit 34 which extends rearward from a left side of the engine 32. The engine 32 includes a crank case; a cylinder provided at an end portion of the crank case; a piston disposed inside the cylinder; and a crank shaft which is disposed inside the crank case and is connected to the piston via a connecting rod. The transmission unit 34 includes a rear arm 34a which also defines a transmission case; a transmission main body (not illustrated) which receives driving power from the crank shaft; and a centrifugal clutch (not illustrated) which is connected to the transmission main body. The transmission main body and the centrifugal clutch are disposed inside the rear arm 34a. The transmission main body is connected to a wheel shaft of the rear wheel 28. The transmission main body may preferably be provided by a V-belt continuous variable transmission, a gear transmission, etc. With the configuration described above, power from the engine 32 is transmitted to the rear wheel 28 via the transmission unit 34. The rear wheel 28 pivots integrally with the drive unit 26 and the rear fender 30. The engine 32 is provided with an air cleaner 36 and a muffler 38.

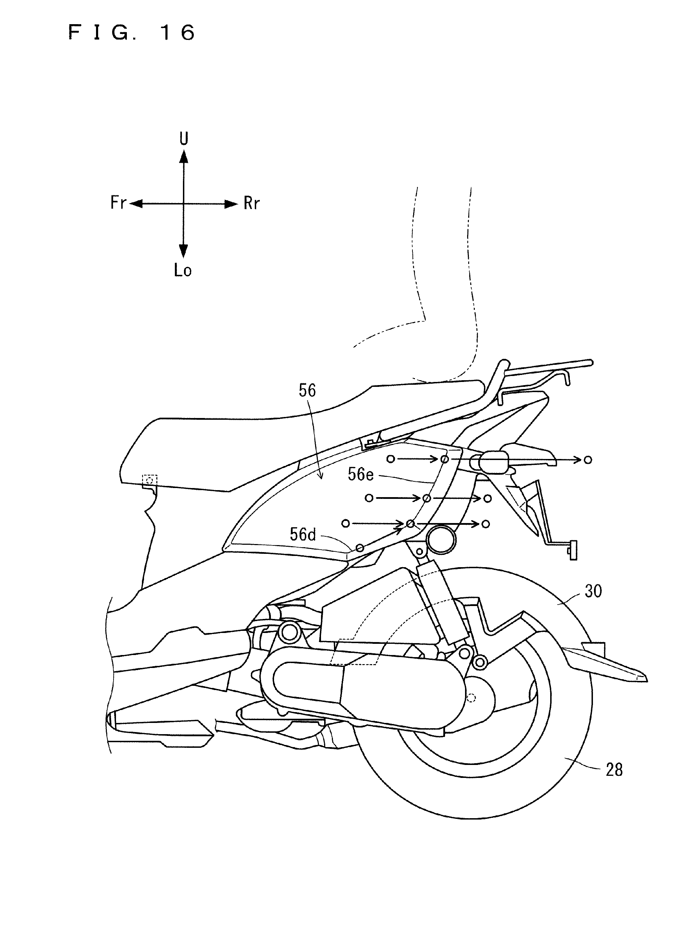

The rear fender 30 covers an upper portion of the rear wheel 28. In a side view, the rear fender 30 extends from below a first lower edge portion 56d and a second lower edge portion 56e (to be described later), to a more rearward position than the rear end of the rear wheel 28 (see Fig. 16). In other words, the rear fender 30 extends in the fore-aft direction, from a more forward position than the center X (see Fig. 5) of the rear wheel 28, to a more rearward position than a rear end of the rear wheel 28. Specifically, the rear fender 30 starts from near a rear portion of the crank case of the engine 32, and extends to a more rearward position than the rear end of the rear wheel 28. The rear fender 30 follows the shape of the rear wheel 28. Specifically, the rear fender 30 preferably has an arc shape or substantially an arc shape in a side view. The rear fender 30 has its rear end located at a lower position than a lower end of a license plate bracket 66 (to be described later).

The seat 40 is provided above the upper frame 12d. The seat 40 is above the pivoting unit 22. A hinge pin 40a is provided on a lower surface of a front portion of the seat 40. Around the hinge pin 40a, the seat 40 is openable/closable in the up-down direction.

Referring to Fig. 7, a storage box 42 is disposed below the seat 40. The storage box 42 stores a battery (not illustrated) in its front portion. When the seat 40 is opened around the hinge pin 40a and is raised upright, the storage box 42 is exposed. Thus, by raising the seat 40 upright, the storage box 42 can be used conveniently, including battery replacement.

Returning to Fig. 1, a low-positioned foot board 44 extends forward from below a front portion of the seat 40. The foot board 44 includes a footrest surface 44a extending horizontally or substantially horizontally.

In front of the foot board 44, a front cover 46 covers the head pipe 12a and an upper portion of the front frame 12b. Above the front cover 46, an upper front cover 48 covers the handlebar 18. Below the foot board 44, a lower cover 50 covers a lower portion of the front frame 12b and a front portion of the lower frames 12c.

Referring to Fig. 1 and Fig. 7, a motorcycle body cover 52 is provided between the seat 40 and the foot board 44. The motorcycle body cover 52 is disposed between the seat 40 and the pivoting unit 22 in a side view. The motorcycle body cover 52 includes, starting from its front to rear, a center cover 54, a pair of side covers 56 and a rear cover 58.

The center cover 54 preferably is U-shaped or substantially U-shaped in a plan view, and is sandwiched between a front portion of the seat 40 and a rear portion of the foot board 44 in a side view.

The pair of side covers 56 are disposed on either sides of the motorcycle frame 12. Referring also to Fig. 3 and Fig. 4, each side cover 56 includes a cover main body 56a; a first and a second upper edge portions 56b, 56c; a first, a second and a third lower edge portions 56d, 56e, 56f; a first and a second upper bending portions 56g, 56h; and a first, a second and a third lower bending portions 56i, 56j, 56k. The first and the second upper edge portions 56b, 56c provide an upper edge of the cover main body 56a whereas the first through the third lower edge portions 56d through 56f provide a lower edge of the cover main body 56a.

The first upper edge portion 56b is curved to bulge slightly upward. The second upper edge portion 56c, the first through the third lower edge portions 56d through 56f are all substantially straight. The third lower edge portion 56f extends obliquely in a rearward and downward direction. In the present preferred embodiment, the third lower edge portion 56f extends rearward and slightly downward. The first lower edge portion 56d extends from a rear end of the third lower edge portion 56f obliquely in a rearward and upward direction. The second lower edge portion 56e extends from a rear end (a connecting portion S; see Fig. 5) of the first lower edge portion 56d obliquely in a rearward and upward direction. The first upper edge portion 56b extends from a front end of the third lower edge portion 56f obliquely in a rearward and upward direction. The second upper edge portion 56c extends from a rear end of the first upper edge portion 56b obliquely in a rearward and downward direction, and is connected to a rear end Q (see Fig. 5) of the second lower edge portion 56e.

Referring to Fig. 5, an angle θ1 defined by the second lower edge portion 56e and a vertical line is smaller than an angle θ2 defined by the first lower edge portion 56d and a vertical line. In other words, the second lower edge portion 56e is inclined more steeply than the first lower edge portion 56d with respect to the horizontal plane. It should be noted here that vertical lines in preferred embodiments of the present invention are defined with respect to the ground surface, and so are lines which are vertical to the ground surface. Also, the angles θ1 and θ2 are angles in a side view. In the present preferred embodiment, the angle θ1 is an angle defined by a tangential line of the second lower edge portion 56e and a vertical line, and is measured in a clockwise direction in a left side view, from the vertical line to the tangential line of the second lower edge portion 56e. The angle θ2 is an angle defined by a tangential line of the first lower edge portion 56d and a vertical line, and is measured in a clockwise direction from the vertical line to the tangential line of the first lower edge portion 56d in a left side view.

In a side view, an angle defined by a lower portion 66a (to be described later) of the license plate bracket 66 and the second lower edge portion 56e is not greater than 90 degrees. In a side view, an angle defined by a license plate 80 (to be described later) and the second lower edge portion 56e is not greater than about 90 degrees. In a side view, an angle defined by the rear cushion unit 24 and the second lower edge portion 56e is not smaller than about 120 degrees (see Fig. 1).

The side cover 56 includes a rear end P, which is at a more forward position than the center X of the rear wheel 28. The rear end P of the side cover 56 is at a more forward position than a rear end Y of the seat 40. The second lower edge portion 56e has a rear end Q, which is at a more forward position than the center X of the rear wheel 28. The rear end Q of the second lower edge portion 56e is at a more forward position than the rear end Y of the seat 40. In a side view, a dimension H1 of the second lower edge portion 56e in the up-down direction is greater than a dimension H2 of the first lower edge portion 56d in the up-down direction. Also in a side view, a dimension L1 of the second lower edge portion 56e in the fore-aft direction is smaller than a dimension L2 of the first lower edge portion 56d in the fore-aft direction.

Referring to Fig. 5, a lens 70a of a tail light 70 in a side view has a portion which is at a more forward position than the rear end Y of the seat 40. In a side view, the rear end P of the side cover 56 is at a more forward position than the lens 70a of the tail light 70. In a side view, the rear end Q of the second lower edge portion 56e is at a more forward position than the lens 70a of the tail light 70. In a side view, the lens 70a of the tail light 70 includes a lower edge 70b which is inclined more closely to a horizontal plane than a rear edge 561 of the side cover 56. Specifically, in a side view, an angle defined by the lower edge 70b and a horizontal plane is smaller than an angle defined by the rear edge 561 and a horizontal plane. In a side view, the lower edge 70b of the lens 70a of the tail light 70 is inclined more closely to a horizontal plane than the second lower edge portion 56e. Specifically, in a side view, an angle defined by the lower edge 70b and a horizontal plane is smaller than an angle defined by the second lower edge portion 56e and a horizontal plane.

Further, in a side view, a line extended from the rear edge 561 of the side cover 56 is at a more forward position than the lens 70a of the tail light 70. In a side view, a line extended from the second lower edge portion 56e is at a more forward position than the lens 70a of the tail light 70.

The second lower bending portion 56j has a substantially constant width (a distance between the second lower edge portion 56e and a rear unit 60 (to be described later)).

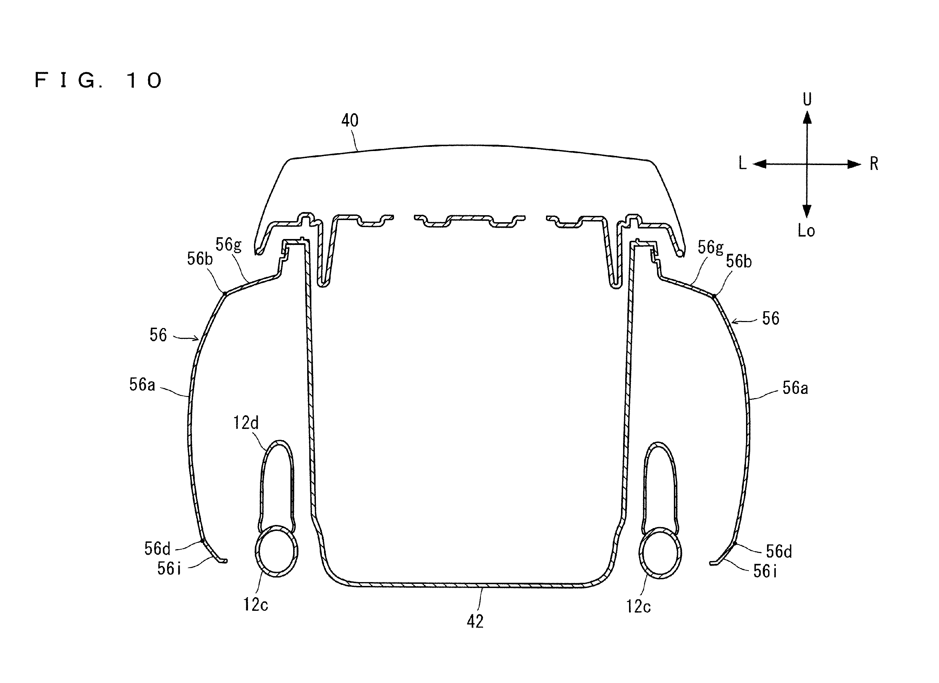

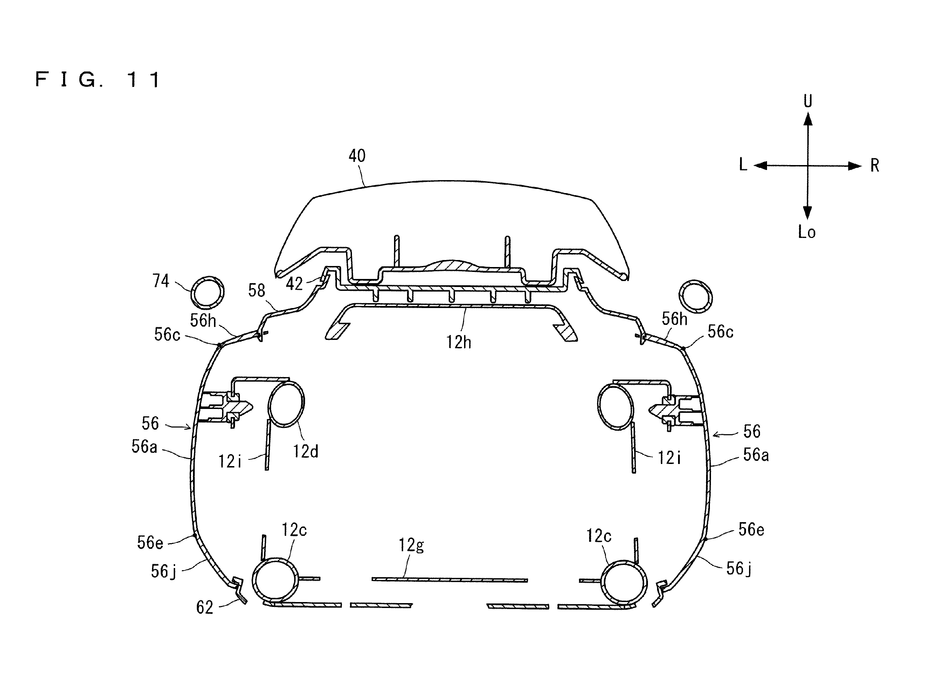

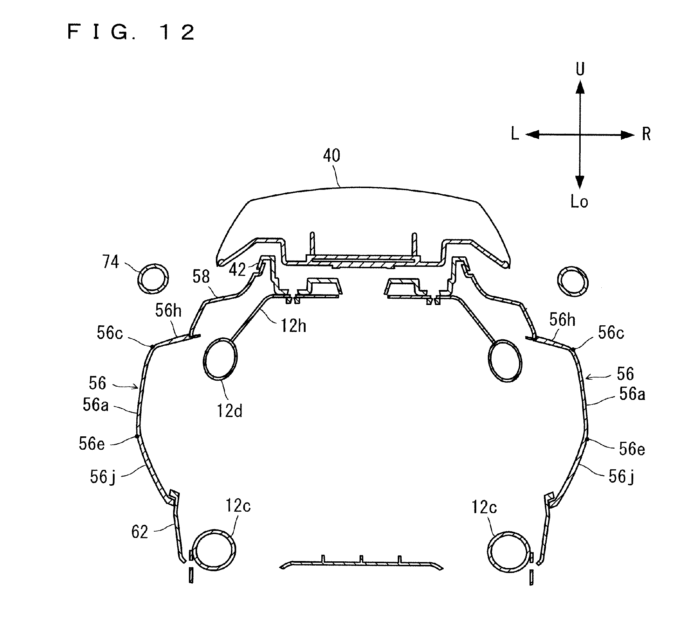

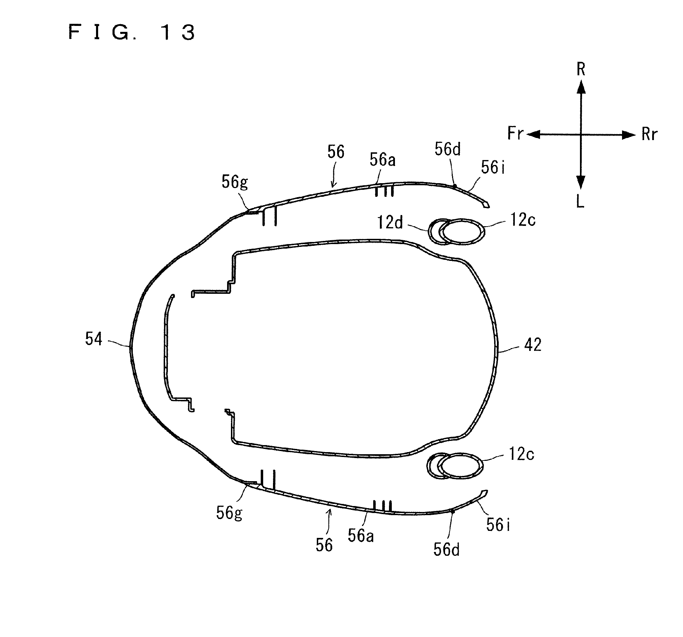

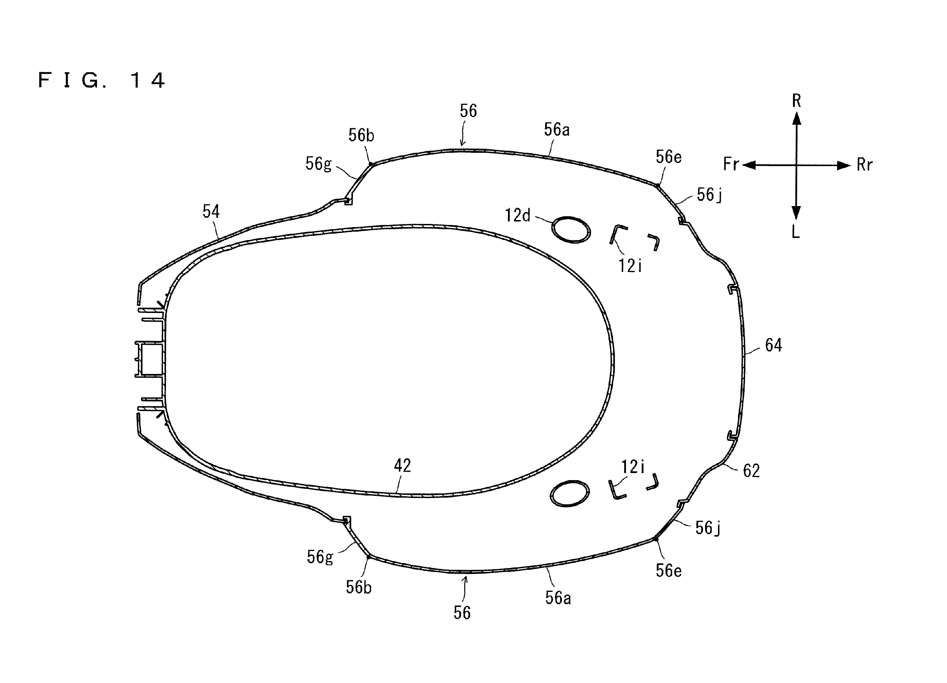

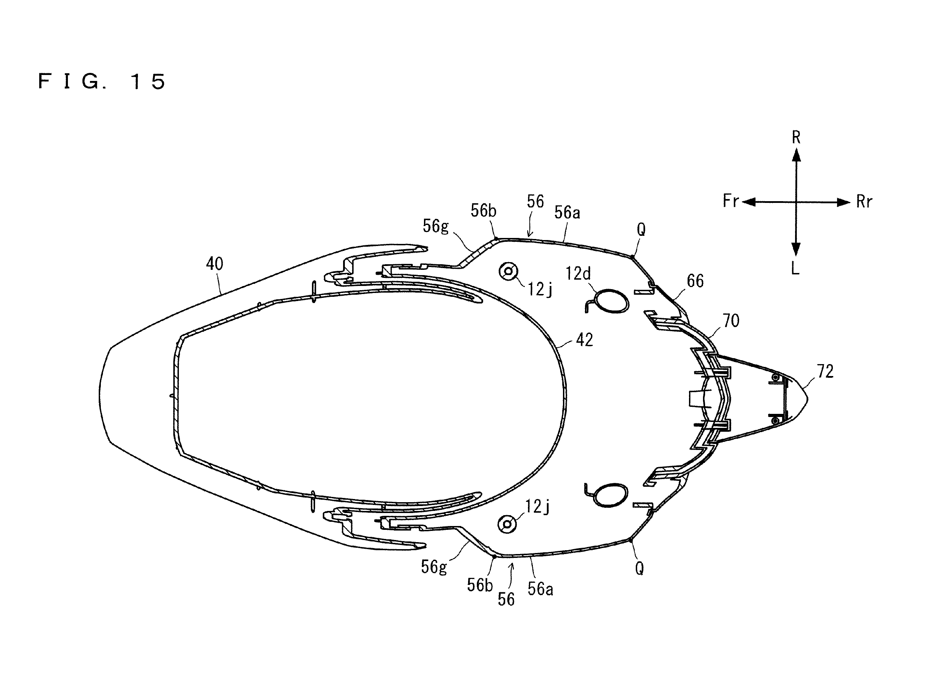

Now, referring to new drawings, Fig. 10 is a schematic end view taken in lines A-A in Fig. 6. Fig. 11 is a schematic end view taken in lines B-B in Fig. 6. Fig. 12 is a schematic end view taken in lines C-C in Fig. 6. Fig. 13 is a schematic end view taken in lines D-D in Fig. 6. Fig. 14 is a schematic end view taken in lines E-E in Fig. 6. Fig. 15 is a schematic end view taken in lines F-F in Fig. 6. Fig. 16 is an illustrative drawing for describing a flow of water and mud.

Referring to Fig. 10 through Fig. 12, the first and the second upper bending portions 56g, 56h bend from the first and the second upper edge portions 56b, 56c in upward and laterally inward directions of the motorcycle, respectively. In other words, the first and the second upper bending portions 56g, 56h bend from the first and the second upper edge portions 56b, 56c respectively, obliquely upward and laterally inward of the motorcycle. Referring to Fig. 10 through Fig. 12, the first and the second lower bending portions 56i, 56j bend from the first and the second lower edge portions 56d, 56e in downward and laterally inward directions of the motorcycle, respectively. In other words, the first and the second lower bending portions 56i, 56j bend from the first and the second lower edge portions 56d, 56e respectively, obliquely downward and laterally inward of the motorcycle. Also, referring to Fig. 13 through Fig. 15, the first and the second lower bending portions 56i, 56j bend from the first and the second lower edge portions 56d, 56e in rearward and laterally inward directions of the motorcycle, respectively. In other words, the first and the second lower bending portions 56i, 56j bend from the first and the second lower edge portions 56d, 56e, respectively, obliquely rearward and laterally inward of the motorcycle. The third lower bending portions 56k bend from the third lower edge portions 56f in downward and inward directions of the motorcycle, respectively. In other words, the third lower bending portions 56k bend from the third lower edge portions 56f, respectively, obliquely downward and inward of the motorcycle. Referring to Fig. 10 through Fig. 12, the first and the second upper bending portions 56g, 56h extend to laterally more inward positions than the first and the second lower bending portions 56i, 56j, respectively.

It should be noted here that each of the first and the second upper bending portions 56g, 56h, and the first through the third lower bending portions 56i through 56k provides a belt-shaped region. The first and the second upper bending portions 56g, 56h, and the first through the third lower bending portions 56i through 56k are combined to provide an annularly enclosing shape to the cover main bodies 56a. The cover main bodies 56a are bulging laterally outward of the motorcycle. In the present preferred embodiment, the cover main bodies 56a bulge slightly in laterally outward directions of the motorcycle.

Referring to Fig. 1 and Fig. 7, the rear cover 58 is U-shaped or substantially U-shaped in a plan view. In a side view, the rear cover 58 has its front portion positioned between the side cover 56 and a rear portion of the seat 40. The rear cover 58 is provided at the second upper bending portions 56h of the side covers 56. Referring to Fig. 2 and Fig. 3, the rear cover 58 does not protrude laterally outward of the motorcycle beyond the side covers 56 in a plan view as well as in a rear view. In the present preferred embodiment, the rear cover 58 is at a more laterally inner position of the motorcycle than the side covers 56 in a plan view as well as in a rear view.

Behind the motorcycle body cover 52 is a rear unit 60.

Referring to Fig. 3 , Fig. 4 and Fig. 7, the rear unit 60 includes a first back cover 62; a second back cover 64; a license plate bracket 66; two rear flashers 68; the tail light 70 and a license light 72. The first back cover 62 includes a hollow portion 62a. The second back cover 64 is provided in the hollow portion 62a. The license plate bracket 66 is attached to an upper portion of the first back cover 62. The license plate bracket 66 is provided behind the motorcycle body cover 52, and in a side view, behind the second lower edge portion 56e. The two rear flashers 68 are attached to either side portions of the license plate bracket 66. The tail light 70 is attached to an upper portion of the license plate bracket 66. The license light 72 is attached to the license plate bracket 66, below the tail light 70.

Also, a carrier 74 extends rearward from below the rear portion of the seat 40. The carrier 74 is attached to the mounting portions 12j and 12k. Referring to Fig. 2, in a plan view, the carrier 74 extends in rearward and laterally inward directions of the motorcycle, following a hypothetical extension of the outline of the side covers 56. In other words, the carrier 74 extends obliquely rearward and inward of the motorcycle, following a hypothetical extension of the outline of the side covers 56 in a plan view. Referring to Fig. 1, the carrier 74 has its front portion sandwiched by a rear portion of the seat 40 on one side and the side cover 56 and the rear cover 58 on the other side, in a side view.

Referring to Fig. 7 through Fig. 9, the rear unit 60 is provided behind the pair of lower frames 12c and the upper frame 12d, of the motorcycle frame 12. The pair of side covers 56 are provided on either sides of the pair of lower frames 12c and of the upper frame 12d. The foot board 44 covers a front portion of the pair of lower frames 12c from above. The storage box 42 is disposed on the connecting portion 12f, being sandwiched between the pair of side covers 56. The center cover 54 is ahead of the storage box 42. The rear cover 58 is provided on the rear unit 60, connecting the pair of side covers 56 with each other.

Referring to Fig. 1, Fig. 2 and Fig. 5, a plate support 76 is attached to the lower portion 66a of the license plate bracket 66. The plate support 76 includes a rear end, which is provided with a reflector 78 facing rearward. A license plate 80 is attached to the plate support 76. The license light 72 illuminates the license plate 80. Also, each side cover 56 includes a rear portion, behind which a sideward facing reflector 82 is provided. These two reflectors 82 are attached to the motorcycle frame 12.

According to the motorcycle 10 as described, the motorcycle body cover 52 includes the side covers 56, each including the first lower edge portion 56d which extends obliquely in a rearward and upward direction; and the second lower edge portion 56e which extends from the rear end (connecting portion S) of the first lower edge portion 56d obliquely in a rearward and upward direction. The angle θ1 which is defined by the second lower edge portion 56e and a vertical line is smaller than the angle θ2 defined by the first lower edge portion 56d and a vertical line. Further, the rear end P of the side cover 56, and the rear end Q of the second lower edge portion 56e are at more forward positions than the center X of the rear wheel 28. The side cover 56 arranged as described above makes it possible to provide the side cover 56 at a forward position, makes the side cover 56 small in dimension in the fore-aft direction, and widens the space between the rear wheel 28 and the seat 40. Therefore, it becomes possible to form the rear fender 30 to cover the upper portion of the rear wheel 28, and to extend from below the first lower edge portion 56d and the second lower edge portion 56e to a more rearward position than the rear end of the rear wheel 28 in a side view.

With the arrangement described above, water and mud splashed by the rear wheel 28 are blocked by the rear fender 30 and do not scatter in an upward direction. Thus, the arrangement reduces the amount of water and mud splashed onto the rider in the pattern 1. Also, referring to Fig. 4 and Fig. 16, water and mud will still be splashed onto the side cover 56 of the motorcycle body cover 52 from the front wheel 16 of the moving motorcycle 10, from other vehicles moving ahead of or moving in parallel with the motorcycle 10, or from falling rain, etc. The water and mud from these sources flow along the first lower edge portion 56d from front to rear, and then leave the motorcycle at the rear end of the first lower edge portion 56d. Further, the second lower edge portion 56e is angled more steeply, i.e., more closely to the vertical, than the first lower edge portion 56d, and therefore, there is little water and mud which flows from front to rear along the second lower edge portion 56e, and as water and mud reach the second lower edge portion 56e, they leave the motorcycle at the second lower edge portion 56e. Since this leaving edge is at a distance from a partial vacuum space behind the rider, the leaving water and mud are not drawn into the vacuum space. Thus, the arrangement significantly reduces and minimizes the amount of water and mud splashed onto the rider in the pattern 2. Therefore, it is possible to reduce splashes in both of the patterns 1 and 2, and to reduce splashes of water and mud to the rider. Further, since it is possible to increase the space above the rear wheel 28, there is no need for raising the position of the seat 40 even if the rear fender 30 is provided to cover the rear wheel 28, which means it is possible to make the motorcycle 10 compact. It should be noted here that in to Fig. 4 and Fig. 16, water and mud are drawn as white circles (o).

By positioning the rear end Q of the second lower edge portion 56e at a more forward location than the rear end Y of the seat 40, the arrangement makes it possible to increase the space between the rear wheel 28 and the seat 40, and increase freedom in layout of the rear fender 30.

By positioning the rear end P of the side cover 56 at a more forward location than the rear end Y of the seat 40, the arrangement makes it possible to further increase the space between the rear wheel 28 and the seat 40, and to further increase design freedom in layout of the rear fender 30.

In a side view, the rear cover 58 has its front portion positioned between the side cover 56 and a rear portion of the seat 40. The rear cover 58 does not protrude laterally outward of the motorcycle beyond the side covers 56, in a plan view nor in a rear view. The arrangement described above makes it possible to give a small lateral dimension of the motorcycle body cover 52 at its rear portion, thereby making the rear portion of the motorcycle 10 compact.

The license plate bracket 66 which is provided behind the motorcycle body cover 52 and is disposed behind the second lower edge portion 56e in a side view, further reduces upward splashes of water and mud in the pattern 2. Specifically, the arrangement makes it possible to further reduce the splashes of water and mud from the side covers 56 onto the rider.

In a side view, a dimension H1 of the second lower edge portion 56e in the up-down direction is greater than a dimension H2 of the first lower edge portion 56d in the up-down direction. The arrangement makes it possible to position the connecting portion S which connects the first lower edge portion 56d with the second lower edge portion 56e at a relatively lower location between the seat 40 and the rear wheel 28 in a side view, making it possible to provide an increased space behind the second lower edge portion 56e. Therefore, it is possible to provide a large space between the side cover 56 and the rear wheel 28.

In a side view, the dimension L1 of the second lower edge portion 56e in the fore-aft direction is smaller than the dimension L2 of the first lower edge portion 56d in the fore-aft direction. This arrangement makes it possible to make a region of the side cover 56 which extends rearward beyond the connecting portion S connecting the first lower edge portion 56d with the second lower edge portion 56e relatively small, between the seat 40 and the rear wheel 28 in a side view, making it possible to provide an increased space behind the second lower edge portion 56e. Therefore, it is possible to provide a large space above the rear wheel 28.

The motorcycle body cover 52 includes the side covers 56, each including the first lower bending portion 56i bending from the first lower edge portion 56d in a downward and laterally inward direction of the motorcycle; and the second lower bending portion 56j bending from the second lower edge portion 56e in a downward and laterally inward direction of the motorcycle. This arrangement makes it possible to make a region of the side cover 56 which extends downward beyond the first lower edge portion 56d and the second lower edge portion 56e relatively small between the seat 40 and the rear wheel 28 in a side view, making it possible to provide an increased space below the first lower edge portion 56d and the second lower edge portion 56e. Therefore, it is possible to provide a large space between the side cover 56 and the rear wheel 28.

The motorcycle body cover 52 includes the side covers 56, each including the first lower bending portion 56i bending from the first lower edge portion 56d in a rearward and laterally inward direction of the motorcycle; and the second lower bending portion 56j bending from the second lower edge portion 56e in a rearward and laterally inward direction of the motorcycle. This arrangement makes it possible to make a region of the side cover 56 which extends rearward beyond the first lower edge portion 56d and the second lower edge portion 56e relatively small between the seat 40 and the rear wheel 28 in a side view, making it possible to provide an increased space behind the first lower edge portion 56d and the second lower edge portion 56e. Therefore, it is possible to provide a large space above the rear wheel 28.

It should be noted here that preferred embodiments of the present invention are also applicable to scooter-type electric motorcycles. Therefore, the drive unit may be provided by a motor. The motor may be provided inside the rear arm or at a wheel, for example. The rear arm is supported pivotably by a frame.

The angle θ1 which is defined by the second lower edge portion 56e and a vertical line may be an angle defined by a straight line which connects the two ends of the second lower edge portion 56e and a vertical line. In this case, the angle θ1 is an angle measured from the vertical line to the straight line in a clockwise direction in a left side view. Likewise, the angle θ2 which is defined by the first lower edge portion 56d and a vertical line may be an angle defined by a straight line which connects the two ends of the first lower edge portion 56d and a vertical line. In this case, the angle θ2 is an angle measured from the vertical line to the straight line in a clockwise direction in a left side view.

In the side view, the first, the second and the third lower edge portions 56d, 56e, 56f are substantially straight, but they may be curved. In the side view, any of the first, the second and the third lower edge portions 56d, 56e, 56f may be concaved or convexed entirely or partially.

Referring to Fig. 5, three or a greater number of edge sub-portions may constitute the edge portion from a front end T (connecting portion between the first lower edge portion 56d and the third lower edge portion 56f) of the first lower edge portion 56d to the rear end Q of the second lower edge portion 56e. Also, two or a greater number of edge sub-portions may constitute the first lower edge portion 56d, and two or a greater number of edge sub-portions may constitute the second lower edge portion 56e. In these edge sub-portions, one located behind the other has a steeper angle with respect to the horizontal plane (smaller angle with respect to the vertical line) than the other.

In the case described above, two of the edge sub-portions which make the biggest angle change between the two will be identified. The connecting point between these identified edge sub-portions represents the connecting portion S between the first lower edge portion and the second lower edge portion. Specifically, the first lower edge portion will be regarded as a portion from the connecting portion between the identified two edge sub-portions to the front end T whereas the second lower edge portion will be regarded as a portion from the connecting portion between the identified two edge sub-portions to the rear end Q. It is preferable that for these additional first lower edge portion and second lower edge portion, the following definitions should be added: an inclination of a straight line connecting the two ends of the first lower edge portion is additionally defined as the inclination of the first lower edge portion whereas an inclination of a straight line connecting the two ends of the second lower edge portion is additionally defined as the inclination of the second lower edge portion. Similarly for the edge sub-portions, it is preferable that an inclination of a straight line connecting the two ends of the edge sub-portion should be defined as the inclination of the edge sub-portion.

The present invention is not limited to cases where the side covers 56 and the rear cover 58 are separate members, but also includes cases where they are formed as a one-piece monolithic element. The side cover 56 may be divided into a plurality of pieces. Specifically, the side cover 56 may be made of a plurality of parts. For example, the side cover 56 may be divided into the cover main body 56a; the first upper bending portions 56g; the second upper bending portions 56h; the first lower bending portion 56i; the second lower bending portion 56j; and the third lower bending portion 56k; or may be constituted by parts which can be obtained by combining any of these portions.

In the preferred embodiments described above, description was made for a case where the rear end P of the side cover 56, and the rear end Q of the second lower edge portion 56e preferably are both at more forward positions than the center X of the rear wheel 28. However, the present invention is not limited to this. The rear end Q of the second lower edge portion 56e may be at a more forward position than the center X of the rear wheel 28, with the rear end P of the side cover 56 being at a more rearward position than the center X of the rear wheel 28.

The side cover included in a preferred embodiment of the present invention may only have the first lower edge portion and the second lower edge portion. Further, preferably, the side cover included in a preferred embodiment of the present invention should preferably include the first lower edge portion and the second lower edge portion, as well as the first lower bending portion and the second lower bending portion. The side cover need not have the first upper bending portion and/or the second upper bending portion. Also, the side cover which does not have the second upper edge portion may have the first upper edge portion extended further so that the rear end of the first upper edge portion continues to the rear end of the second lower edge portion.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A motorcycle comprising:
a motorcycle frame;
a pivoting unit supported pivotably by the motorcycle frame, the pivoting unit including a drive unit, a rear wheel driven by the drive unit, and a rear fender arranged to cover an upper portion of the rear wheel;
a seat disposed above the pivoting unit; and
a motorcycle body cover disposed between the seat and the pivoting unit in a side view of the motorcycle; wherein
the motorcycle body cover includes a side cover provided on a side of the motorcycle frame;
the side cover includes a first lower edge portion extending obliquely in a rearward and upward direction, and a second lower edge portion extending from a rear end of the first lower edge portion obliquely in a rearward and upward direction;
the second lower edge portion and a vertical line define a smaller angle than an angle defined by the first lower edge portion and the vertical line;
the side cover includes a rear end at a more forward position than a center of the rear wheel; and
the rear fender extends from below the first lower edge portion and the second lower edge portion to a more rearward position than a rear end of the rear wheel in the side view of the motorcycle.

2. A motorcycle comprising:
a motorcycle frame;
a pivoting unit supported pivotably by the motorcycle frame, the pivoting unit including a drive unit, a rear wheel driven by the drive unit, and a rear fender arranged to cover an upper portion of the rear wheel;
a seat disposed above the pivoting unit; and
a motorcycle body cover disposed between the seat and the pivoting unit in a side view of the motorcycle; wherein
the motorcycle body cover includes a side cover provided on a side of the motorcycle frame;
the side cover includes a first lower edge portion extending obliquely in a rearward and upward direction, and a second lower edge portion extending from a rear end of the first lower edge portion obliquely in a rearward and upward direction;
the second lower edge portion and a vertical line define a smaller angle than an angle defined by the first lower edge portion and the vertical line;
the second lower edge portion includes a rear end at a more forward position than a center of the rear wheel; and
the rear fender extends from below the first lower edge portion and the second lower edge portion to a more rearward position than a rear end of the rear wheel in the side view of the motorcycle.

3. The motorcycle according to Claim 1 or 2, wherein the side cover includes a rear end at a more forward position than a rear end of the seat.

4. The motorcycle according to Claim 2, wherein the second lower edge portion includes a rear end at a more forward position than a rear end of the seat.

5. The motorcycle according to Claim 1 or 2, wherein the motorcycle body cover further includes a rear cover, the rear cover includes a front portion positioned between the side cover and a rear portion of the seat in the side view of the motorcycle, and the rear cover does not protrude laterally outward of the motorcycle beyond the side cover in a plan view or a rear view of the motorcycle.

6. The motorcycle according to Claim 1 or 2, further comprising a license plate bracket provided behind the motorcycle body cover and behind the second lower edge portion in the side view of the motorcycle.

7. The motorcycle according to Claim 1 or 2, wherein the second lower edge portion has a greater dimension in an up-down direction than the first lower edge portion in the side view of the motorcycle.

8. The motorcycle according to Claim 1 or 2, wherein the second lower edge portion has a smaller dimension in a fore-aft direction than the first lower edge portion in the side view of the motorcycle.

9. The motorcycle according to Claim 1 or 2, wherein the side cover further includes a first lower bending portion extending from the first lower edge portion in a downward and laterally inward direction of the motorcycle, and a second lower bending portion extending from the second lower edge portion in the downward and laterally inward direction of the motorcycle.

10. The motorcycle according to Claim 1 or 2, wherein the side cover further includes a first lower bending portion extending from the first lower edge portion in a rearward and laterally inward direction of the motorcycle, and a second lower bending portion extending from the second lower edge portion in the rearward and laterally inward direction of the motorcycle.
